# EUROPÄISCHE PATENTSCHRIFT

(11) **EP 2 642 894 B1**
(45) Veröffentlichungstag und Bekanntmachung des Hinweises auf die Patenterteilung: **07.01.2015**
(21) Anmeldenummer: 11799065.5
(22) Anmeldetag: 18.11.2011
(51) Int. Cl.: A47B 88/00

(54) **BEFESTIGUNGSVORRICHTUNG FÜR WANDTEILE**
FASTENING DEVICE FOR WALL PARTS
DISPOSITIF DE FIXATION POUR PARTIES DE PAROI

(30) Priorität: 23.11.2010 AT 19452010
(43) Veröffentlichungstag der Anmeldung: 02.10.2013
(73) Patentinhaber: Julius Blum GmbH, 6973 Höchst (AT)
(72) Erfinder: GASSER, Ingo, A-6973 Höchst (AT)
(74) Vertreter: Torggler, Paul Norbert
(86) Internationale Anmeldenummer: PCT/AT2011/000469
(87) Internationale Veröffentlichungsnummer: WO 2012/068604

(56) Entgegenhaltungen:
- GB-A- 2 101 879

## Beschreibung

Die Erfindung betrifft eine Befestigungsvorrichtung zum Verbinden zweier Wandteile eines Möbelteils, insbesondere einer Rückwand mit einer Seitenwand einer Schublade, wobei die Befestigungsvorrichtung an einem Wandteil mindestens eine um eine gedachte Achse federnde Rastnase aufweist, die in eine am anderen Wandteil befestigte oder ausgebildete Rastaufnahme - vorzugsweise lösbar - einrastbar ist.

Im Weiteren bezieht sich die Erfindung auf einen Verbindungsbeschlag zum Querverbinden zweier Wandteile eines Möbelteils mit einer Befestigungsvorrichtung der zu beschreibenden Art. Weiters bezieht sich die Erfindung auf eine Schublade und ein Möbel mit einem Verbindungsbeschlag der genannten Art.

Derartige Befestigungsvorrichtungen gehören bereits in einer Vielzahl zum Stand der Technik. So zeigt etwa die DE 32 18 504 C2 vom 25.03.1993 eine Befestigungsvorrichtung, mit Hilfe derer eine Rückwand mit einer Seitenwand einer Schublade verbunden werden kann. Dabei weist die Befestigungsvorrichtung zwei Rastnasen auf, welche an einer Wand der Schublade angeordnet sind, welche mit Ausnehmungen einer weiteren Wand korrespondieren.

Eine Befestigungsvorrichtung gemäß den Oberbegriff des Anspruchs 1 ist aus der GB 2 101 879 A bekannt.

Aufgabe der Erfindung ist es, eine gegenüber dem Stand der Technik verbesserte Befestigungsvorrichtung anzugeben.

Diese Aufgabe wird erfindungsgemäß durch das Kennzeichen des Anspruchs 1 gelöst.

Dies wird somit dadurch erzielt, dass die gedachte Federachse der Rastnase quer - vorzugsweise im Wesentlichen rechtwinklig - zu einer Wand des Wandteils ausgebildet ist, wobei die Rastaufnahme am anderen Wandteil als Öffnung ausgebildet ist, wobei eine gedachte Normale auf die Öffnung im Wesentlichen parallel zur gedachten Federachse der federnden Rastnase verläuft.

Mit anderen Worten heißt dies, dass die Aufschubrichtung der Rastaufnahme im Wesentlichen parallel - nicht rechtwinklig - zur gedachten Federachse der Rastnase verläuft und dadurch eine Fügerichtung im Wesentlichen parallel zur gedachten Federachse der Rastnase verläuft und dadurch die Rastaufnahme in einer einzelnen, einzigen Fügerichtung bis zum Erreichen einer Endrastposition über die federnde Rastnase bewegbar ist, was einen äußerst einfachen Zusammenbau ermöglicht.

Die Längserstreckung der Rastnase ist dadurch nicht rechtwinklig zur Wand des Wandteils, sondern verläuft vorzugsweise im Wesentlichen parallel zu dieser Wand. Dies bewirkt, dass die Breite des Wandteils keinen Einfluss auf die mögliche Länge der Rastnase hat. Dadurch sind auch sehr schmale Wandteile mit einer derartigen Befestigungsvorrichtung mit einem weiteren Wandteil verbindbar.

Bei den zum Stande der Technik gehörenden Befestigungsvorrichtungen steht die Breite des Wandteils hingegen in direktem Zusammenhang mit der Länge der Rastnase, da diese Rastnasen im Wesentlichen senkrecht zu der Wand des Wandteils angeordnet sind und sich somit maximal über die Breite des Wandteils erstrecken können ohne dabei über den Wandteil hinaus zu ragen.

Durch die Befestigungsvorrichtung ist somit eine kompakte Lösung für eine Befestigungsvorrichtung zum Verbinden zweier Wandteile eines Möbelteils geschaffen.

Weitere vorteilhafte Ausführungsformen der Erfindung sind in den abhängigen Ansprüchen definiert.

Als besonders vorteilhaft hat es sich herausgestellt, wenn die Befestigungsvorrichtung zumindest eine zweite Rastnase aufweist dessen gedachte Federachse quer - vorzugsweise im Wesentlichen rechtwinklig - zu einer Wand des Wandteils ausgebildet ist. Mit Hilfe einer zweiten Rastnase ist eine stabilere Befestigungsvorrichtung erzielbar.

Gemäß einem bevorzugten Ausführungsbeispiel kann vorgesehen sein, dass die beiden Rastnasen im Wesentlichen parallel zueinander ausgebildet sind und miteinander verbunden sind. Auch diese Maßnahme kann zu einer stabileren Konstruktion der Befestigungsvorrichtung beitragen.

Weiters kann bevorzugt vorgesehen sein, dass zwischen den beiden Rastenasen ein Steg ausgebildet ist. Die Ausbildung eines Steges zwischen den beiden Rastnasen kann ebenfalls die Stabilität der Befestigungsvorrichtung erhöhen.

Als besonders vorteilhaft hat es sich erwiesen, wenn die Befestigungsvorrichtung einstückig ausgebildet ist. Eine einstückige Ausführungsform der Befestigungsvorrichtung kann dazu beitragen, die Montagezeiten zu senken.

Besonders bevorzugt kann vorgesehen sein, dass die Befestigungsvorrichtung aus Kunststoff ausgebildet ist. Durch die Ausbildung aus Kunststoff wird die Herstellung der Befestigungsvorrichtung vereinfacht, da diese etwa in einem Spritzgussverfahren hergestellt werden kann.

Als besonders vorteilhaft hat es sich dabei herausgestellt, wenn die Rastnase eine Schrägfläche aufweist, wobei ein Abschnitt der Schrägfläche zum Wandteil hin ansteigt und ein anderer Abschnitt von der gedachten Federachse zum freien Ende der Rastnase hin ansteigt. Durch die Ausgestaltung zweier unterschiedlicher Abschnitte der Schrägfläche kann einerseits erzielt werden, dass die Rastaufnahme zum Wandteil hin über einen Abschnitt der Schrägfläche hin über die Rastnase aufgeschoben werden kann und anschließend verrasten kann und andererseits kann die verrastete Rastaufnahme wieder von der Rastnase gelöst werden, und zwar dann wenn die Rastaufnahme über den zweiten Abschnitt der Schrägfläche, welcher von der gedachten Federachse zum freien Ende der Rastnase hin ansteigt, geschoben wird. Dadurch kann eine zerstörungsfreie Trennung der Rastaufnahme von der Befestigungsvorrichtung erzielt werden.

Als vorteilhaft hat es sich weiters herausgestellt, wenn die Rastaufnahme am anderen Wandteil als Durchbruch ausgebildet ist. Eine als Durchbruch ausgebildete Rastaufnahme kann technisch gut realisiert werden und kann Vorteile bezüglich der Stabilität bringen.

Als vorteilhaft hat es sich herausgestellt, wenn die Befestigungsvorrichtung werkzeuglos lösbar ausgebildet ist. Das werkzeuglose Entrasten der Befestigungsvorrichtung kann zu kurzen Demontagezeiten beitragen, was sich Kosten senkend auswirken kann.

Bevorzugt kann weiters vorgesehen sein, dass die Befestigungsvorrichtung an der Seitenwand einer Schublade ausgebildet ist und dass die Rastaufnahme an der Rückwand einer Schublade ausgebildet ist.

Schutz wird auch begehrt für einen Verbindungsbeschlag zum Querverbinden zweier Wandteile eines Möbelteils mit einer - insbesondere zwei - Befestigungsvorrichtung der vorstehend genannten Art.

Besonders bevorzugt kann dabei vorgesehen sein, dass der Verbindungsbeschlag einstückig ausgebildet ist. Die Ausgestaltung als einstückiger Verbindungsbeschlag kann dazu beitragen, die Herstellungskosten zu senken, da dieser in einem kostengünstigen Spritzgussverfahren hergestellt werden kann.

Konkret wird auch Schutz begehrt für eine Schublade mit mindestens einem - insbesondere zwei - Verbindungsbeschlägen der vorstehend genannten Art.

Schutz wird auch begehrt für ein Möbel mit mindestens einer Schublade der vorstehend genannten Art.

Weitere Einzelheiten und Vorteile der vorliegenden Erfindung werden anhand der Figurenbeschreibung erläutert. Dabei zeigt:
- Fig. 1: eine perspektivische Darstellung eines Verbindungsbeschlages mit zwei Befestigungsvorrichtungen,
- Fig. 2a: eine weitere perspektivische Darstellung eines Verbindungsbeschlages wie in Fig. 1,
- Fig. 2b: eine Detaildarstellung einer Befestigungsvorrichtung eines Verbindungsbeschlages wie in Fig. 2a dargestellt,
- Fig. 3a: eine perspektivische Darstellung zweier Wandteile eines Möbelteils mit einem Verbindungsbeschlag mit zwei Befestigungsvorrichtungen, wobei die beiden Wandteile in getrenntem Zustand sind,
- Fig. 3b: eine Detaildarstellung der Fig. 3a in perspektivischer Ansicht,
- Fig. 4a: eine perspektivische Darstellung zweier Wandteile wie in Fig. 3a beschrieben, jedoch in verbundenem Zustand,
- Fig. 4b: eine Detaildarstellung der Befestigungsvorrichtung der Fig. 4a,
- Fig. 5: eine schematische Darstellung einer Rastnase in Perspektive,
- Fig. 6a: eine Draufsicht auf zwei Wandteile eines Möbelteils in unbefestigter Position,
- Fig. 6b: eine perspektivische Ansicht der beiden Wandteile wie in Fig. 6a dargestellt,
- Fig. 6c: eine Detailansicht zu Fig. 6b,
- Fig. 7: eine perspektivische Ansicht einer Schublade,
- Fig. 8: eine perspektivische Ansicht eines Möbels mit drei Schubladen.

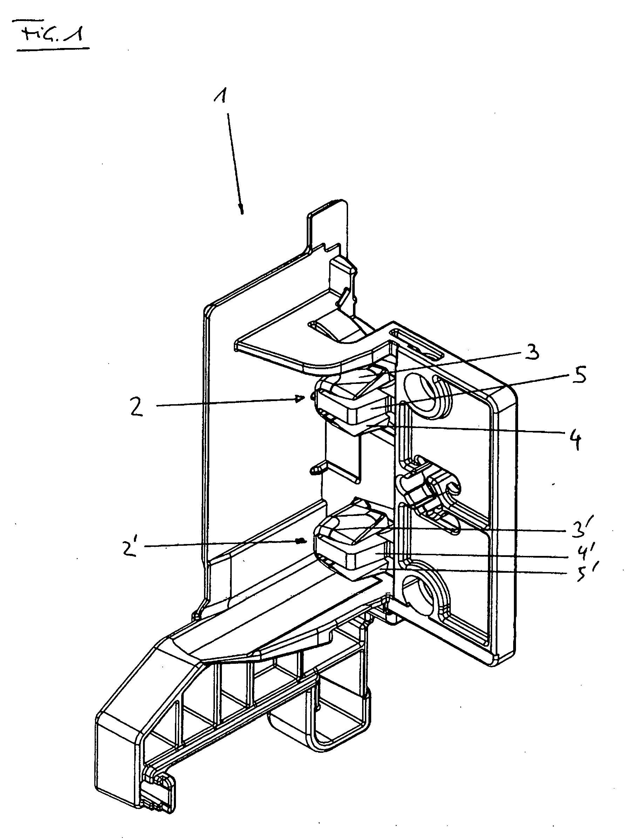

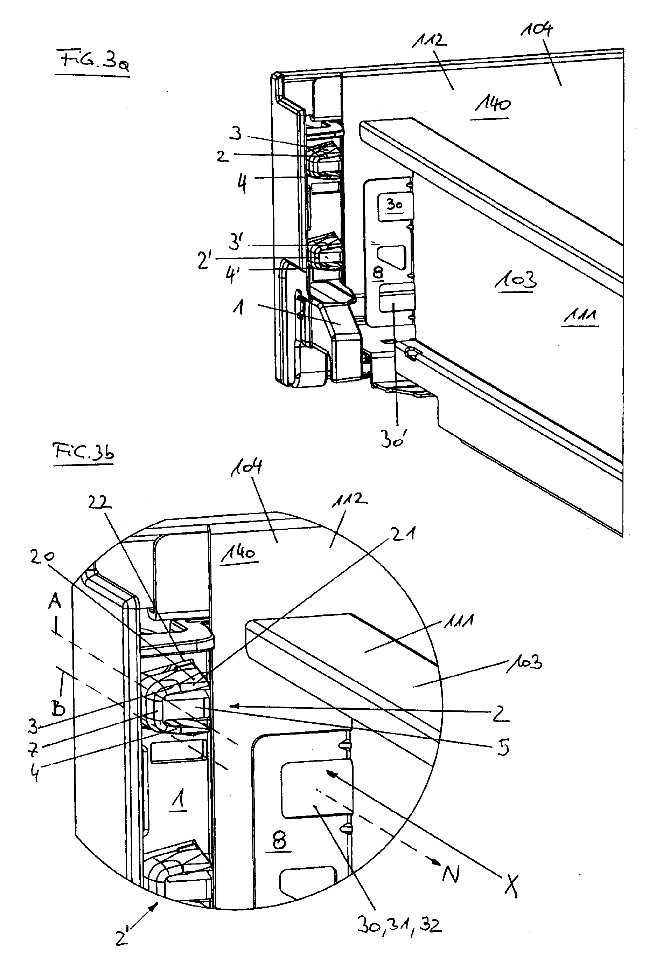

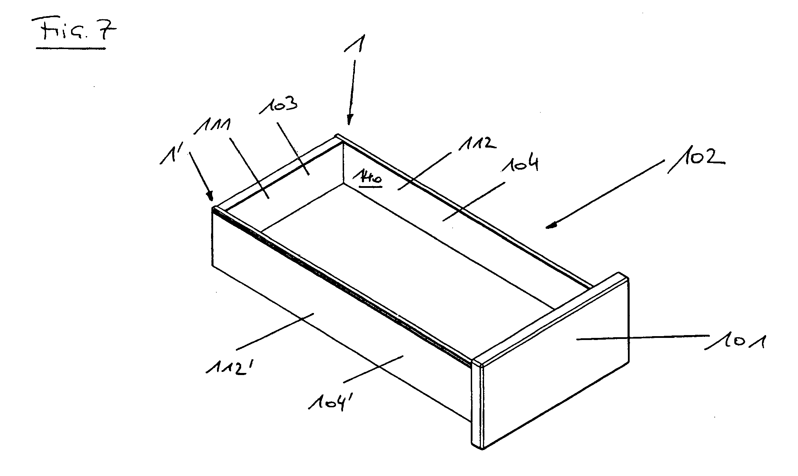

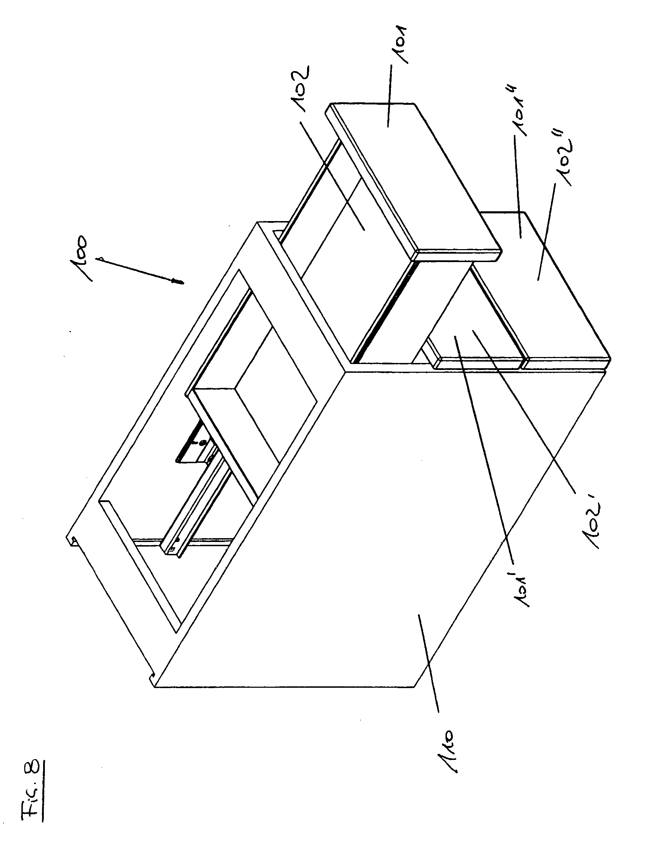

Figur 1 zeigt einen Verbindungsbeschlag 1 zum Querverbinden zweier nicht dargestellter Wandteile 103 und 104 (siehe Figur 3a, 4a, 6b) eines nicht dargestellten Möbelteils 101 (siehe Figur 7, 8) mit zwei Befestigungsvorrichtungen 2 und 2'.

Sowohl die beiden Befestigungsvorrichtungen 2 und 2' sind einstückig ausgebildet, als auch der gesamte Verbindungsbeschlag 1. Als Material wird dabei vorzugsweise Kunststoff für die Befestigungsvorrichtungen 2 und 2' und für den Verbindungsbeschlag 1 verwendet.

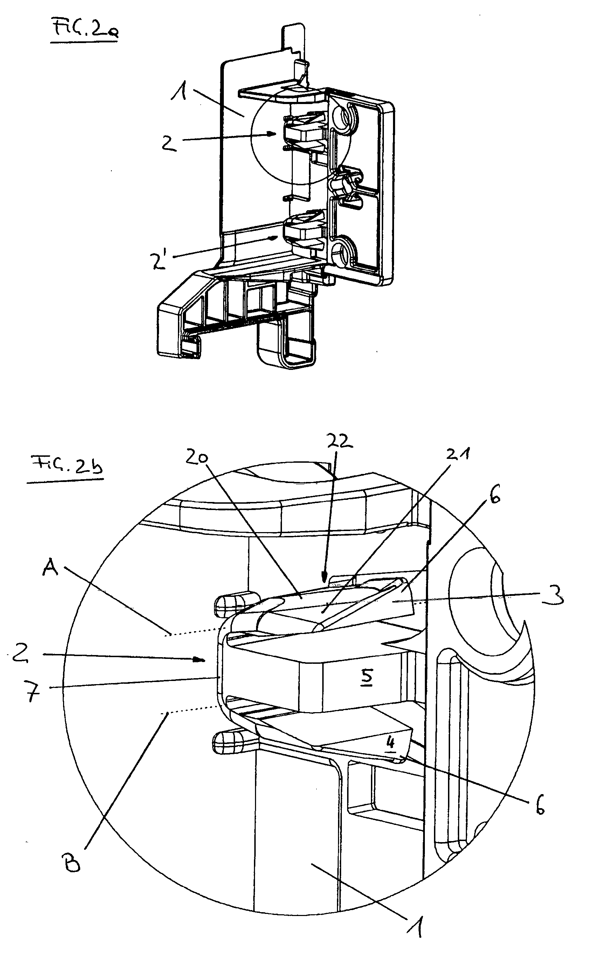

Diese Figur 1 zeigt die Befestigungsvorrichtungen 2 und 2' zum Verbinden zweier Wandteile 103 und 104 eines Möbelteils 101, insbesondere einer Rückwand 111 (siehe z.B. Figur 3a) mit einer Seitenwand 112 (siehe z.B. Figur 3a) einer Schublade 102 (Figur 7), wobei die Befestigungsvorrichtungen 2 und 2' an einem Wandteil 104 mindestens eine um eine gedachte Achse A (siehe Figur 2b) federnde Rastnase 3 bzw. 3' aufweist, die in einem anderen Wandteil 103 befestigte oder ausgebildete Rastaufnahme 30 bzw. 30' (siehe Figur 3a) - vorzugsweise lösbar - einrastbar ist, wobei die gedachte Federachse A der Rastnasen 3 und 3' quer - vorzugsweise im Wesentlichen rechtwinklig - zu einer Wand 140 (siehe Figur 3a) des Wandteils 104 ausgebildet ist.

In diesem bevorzugten Ausführungsbeispiel weisen die Befestigungsvorrichtungen 2 bzw. 2' zumindest noch eine zweite Rastnase 4 bzw. 4' auf, deren gedachte Federachse B (siehe Figur 2b) quer - vorzugsweise im Wesentlichen rechtwinklig - zu einer Wand 140 des Wandteils 104 ausgebildet sind. Dabei sind die Rastnasen 3 bzw. 3' und 4 bzw. 4' im Wesentlichen symmetrisch angeordnet.

Zwischen den beiden Rastnasen 3 und 4 bzw. 3' und 4' ist jeweils ein Steg 5 bzw. 5' ausgebildet, welcher dazu beiträgt, die Stabilität der Befestigungsvorrichtung 2 bzw. 2' zu erhöhen.

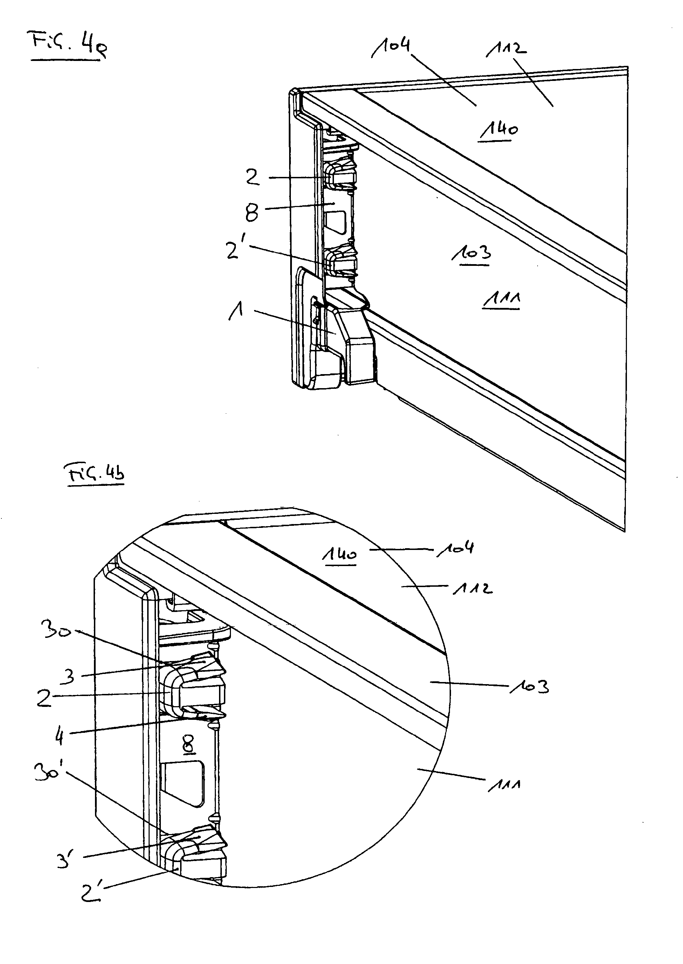

Der Verbindungsbeschlag 1 dient in diesem bevorzugten Ausführungsbeispiel dazu, eine Rückwand 111 mit einer Seitenwand 112 einer Schublade 102 zu verbinden (siehe dazu Figur 3a und 4a). Dazu wird der Verbindungsbeschlag 1 an der Seitenwand 112 befestigt und anschließend kann dann die Rückwand 111 an dem Verbindungsbeschlag 1 befestigt werden.

Figur 2a zeigt einen Verbindungsbeschlag 1, wie eben in Figur 1 beschrieben, in ebenfalls perspektivischer Ansicht.

Figur 2b zeigt eine Detailansicht in perspektivischer Darstellung des eingekreisten Bereichs der Figur 2a.

Die Befestigungsvorrichtung 2 weist in diesem bevorzugten Ausführungsbeispiel zwei Rastnasen 3 und 4 auf, welche miteinander über den Verbindungsteil 7 verbunden sind. Somit weist die Befestigungsvorrichtung 2 einen U-förmigen Querschnitt auf.

Am Verbindungsteil 7 ist weiteres ein Steg 5 angeordnet, welcher zwischen die beiden Rastnasen 3 und 4 ragt. Die beiden Rastnasen 3 und 4 sind dabei federnd ausgebildet, wobei die Rastnase 3 um eine Federachse A federt, und die Rastnase 4 um eine Federachse B.

Diese beiden Federachsen A und B sind in diesem bevorzugten Ausführungsbeispiel quer - vorzugsweise im Wesentlichen rechtwinklig - zu einer nicht dargestellten Wand 140 (siehe Figur 3a, 3b, 4a, 4b) eines Wandteils 104 (siehe Figur 3a, 3b, 4a, 4b) ausgebildet.

Die Schrägfläche 20 der Rastnase 3 weist dabei einen Abschnitt 21 auf, welcher sich im Wesentlichen in die gleiche Richtung erstreckt, wie dies die Federachse A tut. Bei zum Stande der Technik gehörenden Rastnasen sind diese normalerweise um etwa 90° zu einander versetzt (genau genommen um 90° minus dem Winkel des Anstiegs des Abschnitts der Schrägfläche).

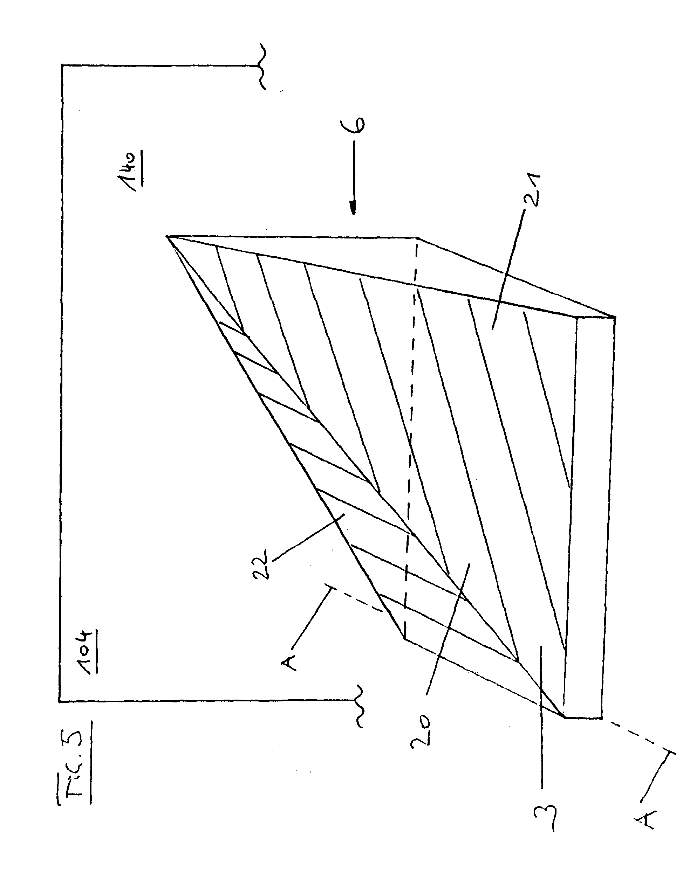

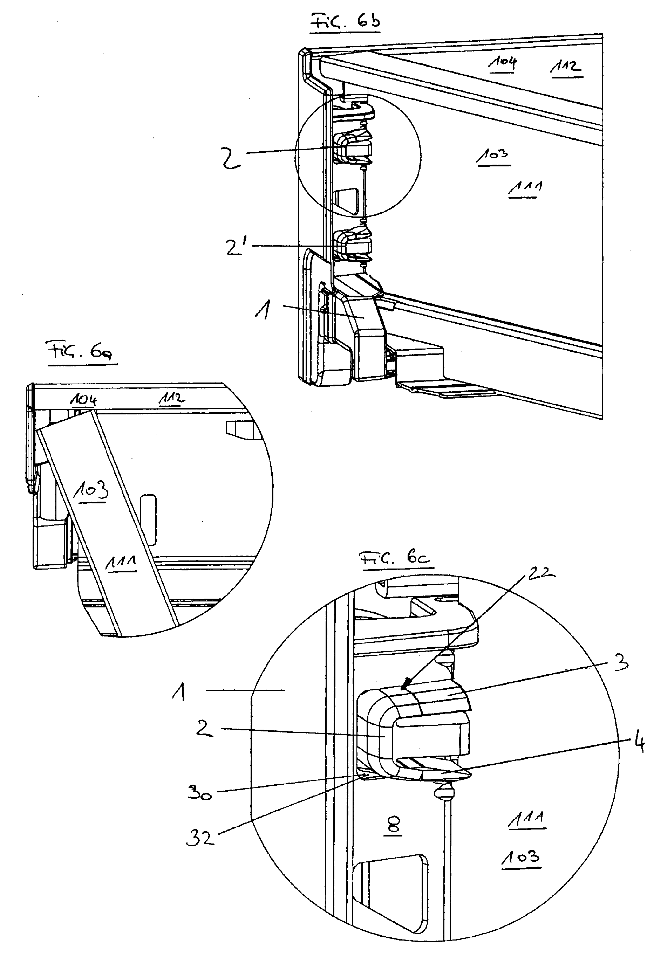

Des Weiteren weist die Schrägfläche einen weiteren Abschnitt 22 auf, welcher sich von der gedachten Federachse A bzw. B zum freien Ende 6 der Rastnase 3 bzw. 4 hin ansteigt (siehe dazu Figur 3b). Durch diesen weiteren Abschnitt 22 der Schrägfläche 20 wird es in diesem bevorzugten Ausführungsbeispiel ermöglicht, dass die Befestigungsvorrichtung 2 werkzeuglos gelöst werden kann (siehe dazu Figurenbeschreibung der Figur 5, 6a, 6b, 6c).

Figur 3a zeigt eine perspektivische Darstellung zweier Wandteile 103 und 104 in voneinander gelöstem Zustand. In diesem bevorzugten Ausführungsbeispiel ist der Wandteil 104 als Seitenwand 112 einer nicht dargestellten Schublade 102 ausgebildet, der andere Wandteil 103 ist als Rückwand 111 ausgebildet. An der Seitenwand 112 ist der Verbindungsbeschlag 1 vormontiert. Der Verbindungsbeschlag 1 weist zwei Befestigungsvorrichtungen 2 und 2' auf, welche mit der Rastaufnahme 30 bzw. 30' der Rückwand 111 korrespondieren.

In diesem bevorzugten Ausführungsbeispiel sind die Rastaufnahmen 30 bzw. 30' als Öffnungen 31 - genau genommen als Durchbruch 32 - ausgebildet (siehe Figur 3b).

Die Rastaufnahmen 30 bzw. 30' befinden sich dabei in der Rastplatte 8, welche zum Verbinden der beiden Wandteile 103 und 104 über die beiden Befestigungsvorrichtungen 2 und 2' geschoben wird und, nachdem sie die Rastnasen 3 und 4 bzw. 3' und 4' der Befestigungsvorrichtungen 2 und 2' zusammengedrückt hat, hinter den Rastnasen 3 und 4 bzw. 3' und 4' der beiden Befestigungsvorrichtungen 2 und 2' einrastet. Dadurch ist eine stabile Verbindung der beiden Wandteile 103 und 104 bzw. der Seitenwand 112 mit der Rückwand 111 geschaffen (siehe Figur 4a).

Figur 3b zeigt eine Detaildarstellung der Befestigungsvorrichtung 2 wie in Figur 3a dargestellt.

Die Befestigungsvorrichtung 2 zum Verbinden zweier Wandteile 103 und 104 eines nicht dargestellten Möbelteils 101 (siehe Figur 8), ist in diesem bevorzugten Ausführungsbeispiel dazu angedacht, die Rückwand 111 mit der Seitenwand 112 einer nicht dargestellten Schublade 102 (siehe Figur 7) zu verbinden. Die Befestigungsvorrichtung 2 weist in diesem bevorzugten Ausführungsbeispiel eine federnde Rastnase 3 und eine federnde Rastnase 4 auf, wobei die beiden Rastnasen 3 und 4 jeweils um eine Federachse A bzw. B federnd ausgebildet sind. Dabei sind die gedachten Federachsen A und B der Rastnasen 3 und 4 quer - vorzugsweise im Wesentlichen rechtwinklig - zu der Wand 140 des Wandteils 104 - in diesem Fall der Seitenwand 112 - ausgebildet, wobei die Rastaufnahme 30 am anderen Wandteil 103 als Öffnung 31 ausgebildet ist, wobei eine gedachte Normale N auf die Öffnung 31 im Wesentlichen parallel zu den gedachten Federachsen A und B der federnden Rastnasen 3 und 4 verläuft.

Dadurch verläuft eine Fügerichtung X im Wesentlichen parallel zu den gedachten Federachsen A und B der Rastnasen 3 und 4 und dadurch kann die Rastaufnahme 30 in einer einzelnen, einzigen Fügerichtung X bis zum Erreichen einer Endrastposition über die beiden federnden Rastnasen 3 und 4 bewegt werden, was somit einen äußerst raschen und einfachen Zusammenbau ermöglicht.

Durch diese Anordnung der Federachsen A und B hat die Längserstreckung der Rastnase 3 und 4 - von den gedachten Federachsen A und B hin zum freien Ende der Rastnasen 3 und 4 - keinen Einfluss auf die maximale Wandstärke der Seitenwand 112. Dies ermöglicht es, dass schmale Seitenwände 112 und 112' (siehe Figur 7) bei einer Schublade hergestellt werden können, was sowohl ästhetisch ansprechend ist als auch zu einem Raumgewinn im Inneren der Schublade führt.

Montage der beiden Wandteile 103 und 104:
In den Figur 3a und 3b sind die beiden getrennten Wandteile 103 und 104 - die voneinander getrennte Seitenwand 112 und Rückwand 111 - dargestellt, in den Figur 4a und 4b sind die Seitenwand 112 und die Rückwand 111 über den Verbindungsbeschlag 1 und dessen Befestigungsvorrichtungen 2 und 2' miteinander verbunden und verrastet.

Zum Befestigen der Rückwand 111 an der Seitenwand 112 wird die Rückwand 111 bzw. deren Rastplatte 8 mit deren beiden Rastaufnahmen 30 und 30', welche als Durchbruch 32 ausgebildet sind, über die Rastnasen 3 und 4, bzw. 3' und 4' in einer einzelnen, einzigen Fügerichtung X bis zum Erreichen einer Endrastposition, geschoben. Dazu weisen die Rastnasen einen Abschnitt 21 einer Schrägfläche 20 auf, welche zur Wand 140 des Wandteils 104 - in diesem Ausführungsbeispiel zur Seitenwand 112 - hin ansteigt.

Die Rastplatte 8 drückt, während sie über die Rastnasen 3 und 4 bzw. 3' und 4' geschoben wird, die Rastnasen 3 und 4 bzw. 3' und 4' so zusammen, bis sie diese überwunden hat und anschließend hinter den Rastnasen ansteht und sich die Rastnasen 3 und 4 bzw. 3' und 4' aufgrund ihrer Federwirkung wieder entspannen. Somit ist die Rastplatte 8, und damit die Rückwand 111, an der Seitenwand 112 befestigt.

Wie aus der Figur 3b gut ersichtlich ist, weist die Rastnase 3 nicht nur einen Abschnitt 21 der Schrägfläche 20 auf, welcher in Richtung Wand 140 der Seitenwand 112 hin ansteigt, sondern auch einen Abschnitt 22 der Schrägfläche 20, welcher im Wesentlichen parallel zur Wand 140 des Wandteils 104 hin - in diesem Ausführungsbeispiel als Seitenwand 112 ausgebildet - ansteigt. Durch diesen Abschnitt 22 der Schrägfläche 20 wird es ermöglicht, dass die Verbindung der beiden Wandteile 103 und 104 über den Verbindungsbeschlag 1 nach erfolgter Montage auch wieder voneinander getrennt - also demontiert - werden kann (siehe Figurenbeschreibung 6a, 6b und 6c bzw. Figur 5).

Figur 5 zeigt eine schematische Darstellung einer Rastnase 3 wie sie in den vorherigen Figurenbeschreibungen erwähnt worden ist. Die Rastnase 3 ist um eine gedachte Federachse A schwenkbar. Die Rastnase 3 weist eine Schrägfläche 20 auf, wobei die Schrägfläche 20 zwei unterschiedliche Abschnitte 21 und 22 aufweist. Der Abschnitt 21 der Schrägfläche 20 steigt dabei in Richtung Wand 140 des Wandteils 104 an und dient als Einführschräge. Beim Einschieben der Rastplatte 8 (siehe Figur 3a und 4a) verschwenkt die Rastplatte 8 die Rastnase 3 um die Federachse A und drückt somit die nicht dargestellte Befestigungsvorrichtung 2 zusammen. Nachdem die Rastplatte 8 die Spitze der Rastnase 3 überschritten hat, entspannt sich die Federwirkung der Rastnase 3 wieder und die Rastplatte 8 ist hinter der Rastnase 3 befestigt, da sich die Rastnasen aufgespannt haben und somit sich die Rastplatte 8 nicht mehr über die Rastnase 3 gezogen werden kann (siehe dazu Figur 4a und 4b).

Zum erneuten Lösen der Rastplatte 8 weist die Rastnase 3 in Abschnitt 22 der Schrägfläche 20 auf, welcher von der gedachten Federachse A zum freien Ende 6 der Rastnase 3 hin ansteigt. Dieser Abschnitt 22 dient als Ausklappschräge. Wird nun die Rückwand 111 in Richtung Seitenwand 112 und damit zur Rastnase 3 hin verschwenkt, so wird die Rastnase 3 durch die Rastplatte 8 wiederum zusammengedrückt und die Rückwand 111 kann von der Seitenwand 112 bzw. vom Verbindungsbeschlag 1 wieder abgenommen werden.

Dieser Demontagevorgang ist in den Figuren 6a, 6b und 6c dargestellt, bei denen der Wandteil 103 bereits einen vom rechten Winkel abweichenden Winkel zum Wandteil 104 aufweist. Die Rastplatte 8 drückt die Befestigungsvorrichtung 2 - bzw. deren Rastnasen 3 und 4 wieder zusammen, wodurch eine Entnahme des Wandteils 103 ermöglicht wird. Dies wird durch den Abschnitt 22 (siehe Figur 3b und 5) der Schrägfläche 20 ermöglicht, welcher von der gedachten Federachse A (siehe Figur 2b und 5) zum freien Ende 6 der Rastnase 3 bzw. 4 hin ansteigt.

Somit ist eine sowohl kompakte als auch wieder lösbare Befestigungsvorrichtung geschaffen.

Figur 7 zeigt ein Möbelteil 101, welches Wandteile 103, 104 und 104' aufweist. Dabei sind die Wandteile 104 und 104' als Seitenwände 112 bzw. 112' ausgebildet und der Wandteil 103 ist als Rückwand 111 ausgebildet. Die Seitenwand 112 ist mit der Rückwand 111 über einen Verbindungsbeschlag 1, wie in den vorangegangenen Figurenbeschreibungen geschildert, verbunden. Die Seitenwand 112' ist mit der Rückwand 111 über einen Verbindungsbeschlag 1' verbunden, welcher zwar nicht baugleich aber doch sinngemäß ähnlich wie der Verbindungsbeschlag 1 ausgebildet ist.

Figur 8 zeigt ein Möbel 100 mit einem Möbelkorpus 110. Das Möbel 100 weist weiters drei Möbelteile 101, 101' und 101" auf, welche als Schubladen 102, 102' und 102" - wie eben in der Figur 7 beschrieben - ausgebildet sind.

## Patentansprüche

1. Befestigungsvorrichtung (2) zum Verbinden zweier Wandteile (103, 104) eines Möbelteils (101), insbesondere einer Rückwand (111) mit einer Seitenwand (112) einer Schublade (102), wobei die Befestigungsvorrichtung (2) an einem Wandteil (104) mindestens eine um eine gedachte Federachse (A) federnde Rastnase (3) aufweist, die in eine am anderen Wandteil (103) befestigte oder ausgebildete Rastaufnahme (30) - vorzugsweise lösbar - einrastbar ist, **dadurch gekennzeichnet, dass** die gedachte Federachse (A) der Rastnase (3) quer - vorzugsweise im Wesentlichen rechtwinklig - zu einer Wand (140) des Wandteils (104) ausgebildet ist, wobei die Rastaufnahme (30) am anderen Wandteil (103) als Öffnung (31) ausgebildet ist, wobei eine gedachte Normale (N) auf die Öffnung (31) im Wesentlichen parallel zur gedachten Federachse (A) der federnden Rastnase (3) verläuft.

2. Befestigungsvorrichtung nach Anspruch 1, **dadurch gekennzeichnet, dass** die Befestigungsvorrichtung (2) zumindest eine zweite Rastnase (4) aufweist dessen gedachte Federachse (B) quer - vorzugsweise im Wesentlichen rechtwinklig - zu einer Wand (140) des Wandteils (104) ausgebildet ist.

3. Befestigungsvorrichtung nach Anspruch 1 oder 2, **dadurch gekennzeichnet, dass** die beiden Rastnasen (3, 4) im Wesentlichen parallel zueinander ausgebildet sind und miteinander verbunden (7) sind.

4. Befestigungsvorrichtung nach einem der Ansprüche 1 bis 3, **dadurch gekennzeichnet, dass** zwischen den beiden Rastenasen (3, 4) ein Steg (5) ausgebildet ist.

5. Befestigungsvorrichtung nach einem der Ansprüche 1 bis 4, **dadurch gekennzeichnet, dass** die Befestigungsvorrichtung (2) einstückig ausgebildet ist.

6. Befestigungsvorrichtung nach einem der Ansprüche 1 bis 5, **dadurch gekennzeichnet, dass** die Befestigungsvorrichtung (2) aus Kunststoff ausgebildet ist.

7. Befestigungsvorrichtung nach einem der Ansprüche 1 bis 6, **dadurch gekennzeichnet, dass** die Rastnase (3, 4) eine Schrägfläche (20) aufweist, wobei ein Abschnitt (21) der Schrägfläche (20) zum Wandteil (104) hin ansteigt und ein anderer Abschnitt (22) von der gedachten Federachse (A, B) zum freien Ende (6) der Rastnase (3, 4) hin ansteigt.

8. Befestigungsvorrichtung nach einem der Ansprüche 1 bis 7, **dadurch gekennzeichnet, dass** die Rastaufnahme (30) am anderen Wandteil (103) als Durchbruch (32) ausgebildet ist.

9. Befestigungsvorrichtung nach einem der Ansprüche 1 bis 8, **dadurch gekennzeichnet, dass** die Befestigungsvorrichtung (2) werkzeuglos lösbar ausgebildet ist.

10. Befestigungsvorrichtung nach einem der Ansprüche 1 bis 9, **dadurch gekennzeichnet, dass** die Befestigungsvorrichtung (2) an der Seitenwand (112) einer Schublade (102) ausgebildet ist und dass die Rastaufnahme (30) an der Rückwand (111) einer Schublade (102) ausgebildet ist.

11. Verbindungsbeschlag (1) zum Querverbinden zweier Wandteile (103, 104) eines Möbelteils (101) mit einer - insbesondere zwei - Befestigungsvorrichtung (2) nach einem der Ansprüche 1 bis 10.

12. Verbindungsbeschlag nach Anspruch 11, **dadurch gekennzeichnet, dass** der Verbindungsbeschlag (1) einstückig ausgebildet ist.

13. Schublade (102) mit mindestens einem - insbesondere zwei - Verbindungsbeschlag (1) nach Anspruch 11 oder 12.

14. Möbel (100) mit mindestens einer Schublade (102) nach Anspruch 13.

## Claims

1. A fastening device (2) for connecting two wall parts (103, 104) of a furniture part (101), in particular a rear wall (111) to a side wall (112) of a drawer (102), wherein the fastening device (2) on a wall part (104) has at least one resilient latch (3) which is resilient about a notional spring axis (A) and which is - preferably releasably - latchable into a latching receiving means (30) provided on or fastened to the other wall part (103), **characterised in that** the notional spring axis (A) of the resilient latch (3) is provided transversely - preferably substantially at a right angle - relative to a wall (140) of the wall part (104), wherein the latching receiving means (30) on the other wall part (103) is in the form of an opening (31), wherein a notional normal (N) to the opening (31) extends substantially parallel to the notional spring axis (A) of the resilient latch (3).

2. A fastening device as set forth in claim 1 **characterised in that** the fastening device (2) has at least one second resilient latch (4) whose notional spring axis (B) is provided transversely - preferably substantially at a right angle - to a wall (140) of the wall part (104).

3. A fastening device as set forth in claim 1 or claim 2 **characterised in that** the two resilient latches (3, 4) are substantially parallel to each other and are connected together (7).

4. A fastening device as set forth in one of claims 1 through 3 **characterised in that** a limb (5) is provided between the two resilient latches (3, 4).

5. A fastening device as set forth in one of claims 1 through 4 **characterised in that** the fastening device (2) is in one piece.

6. A fastening device as set forth in one of claims 1 through 5 **characterised in that** the fastening device (2) is made from plastic material.

7. A fastening device as set forth in one of claims 1 through 6 **characterised in that** the resilient latch (3, 4) has an inclined surface (20), wherein a portion (21) of the inclined surface (20) rises towards the wall part (104) and another portion (22) rises from the notional spring axis (A, B) towards the free end (6) of the resilient latch (3, 4).

8. A fastening device as set forth in one of claims 1 through 7 **characterised in that** the latching receiving means (30) on the other wall part (103) is in the form of a through opening (32).

9. A fastening device as set forth in one of claims 1 through 8 **characterised in that** the fastening device (2) is adapted to be releasable without a tool.

10. A fastening device as set forth in one of claims 1 through 9 **characterised in that** the fastening device (2) is provided at the side wall (112) of a drawer (102) and the latching receiving means (30) is provided at the rear wall (111) of a drawer (102).

11. A connecting fitting (1) for transversely connecting two wall parts (103, 104) of a furniture part (101) with a - in particular two - fastening device (2) as set forth in one of claims 1 through 10.

12. A connecting fitting as set forth in claim 11 **characterised in that** the connecting fitting (1) is in one piece.

13. A drawer (102) having at least one - in particular two - connecting fitting (1) as set forth in claim 11 or claim 12.

14. An article of furniture (100) with at least one drawer (102) as set forth in claim 13.

## Revendications

1. Dispositif de fixation (2) servant à assembler deux parties de paroi (103, 104) d'une partie de meuble (101), en particulier une paroi arrière (111) et une paroi latérale (112) d'un tiroir (102), sachant que le dispositif de fixation (2) présente, au niveau d'une partie de paroi (104), au moins un ergot d'encliquetage (3) pouvant tourner de manière élastique autour d'un axe de ressort imaginaire (A), lequel ergot d'encliquetage peut être encliqueté - de préférence de manière amovible - dans un logement d'encliquetage (30) fixé ou réalisé au niveau de l'autre partie de paroi (103), **caractérisé en ce que** l'axe de ressort imaginaire (A) de l'ergot d'encliquetage (3) est réalisé de manière transversale - de préférence essentiellement à angle droit - par rapport à une paroi (140) de la partie de paroi (104), sachant que le logement d'encliquetage (30) est réalisé sous la forme d'une ouverture (31) au niveau de l'autre partie de paroi (103), sachant qu'une normale imaginaire (N) sur l'ouverture (31) s'étend essentiellement de manière parallèle par rapport à l'axe de ressort imaginaire (A) de l'ergot d'encliquetage (3) élastique.

2. Dispositif de fixation selon la revendication 1, **caractérisé en ce que** le dispositif de fixation (2) présente au moins un deuxième ergot d'encliquetage (4), dont l'axe de ressort imaginaire (B) est réalisé de manière transversale - de préférence essentiellement à angle droit - par rapport à une paroi (140) de la partie de paroi (104).

3. Dispositif de fixation selon la revendication 1 ou 2, **caractérisé en ce que** les deux ergots d'encliquetage (3, 4) sont réalisés essentiellement de manière parallèle l'un à l'autre et sont assemblés (7) l'un à l'autre.

4. Dispositif de fixation selon l'une quelconque des revendications 1 à 3, **caractérisé en ce qu'**une entretoise (5) est réalisée entre les deux ergots d'encliquetage (3, 4).

5. Dispositif de fixation selon l'une quelconque des revendications 1 à 4, **caractérisé en ce que** le dispositif de fixation (2) est réalisé d'un seul tenant.

6. Dispositif de fixation selon l'une quelconque des revendications 1 à 5, **caractérisé en ce que** le dispositif de fixation (2) est réalisé en matière plastique.

7. Dispositif de fixation selon l'une quelconque des revendications 1 à 6, **caractérisé en ce que** l'ergot d'encliquetage (3, 4) présente une surface oblique (20), sachant qu'une section (21) de la surface oblique (20) est ascendante en direction de la partie de paroi (104) et qu'une autre section (22) est ascendante depuis l'axe de ressort imaginaire (A, B) en direction de l'extrémité libre (6) de l'ergot d'encliquetage (3, 4).

8. Dispositif de fixation selon l'une quelconque des revendications 1 à 7, **caractérisé en ce que** le logement d'encliquetage (30) est réalisé au niveau de l'autre partie de paroi (103) sous la forme d'un passage (32).

9. Dispositif de fixation selon l'une quelconque des revendications 1 à 8, **caractérisé en ce que** le dispositif de fixation (2) est réalisé de manière à pouvoir être retiré sans outil.

10. Dispositif de fixation selon l'une quelconque des revendications 1 à 9, **caractérisé en ce que** le dispositif de fixation (2) est réalisé au niveau de la paroi latérale (112) d'un tiroir (102), et **en ce que** le logement d'encliquetage (30) est réalisé au niveau de la paroi arrière (111) d'un tiroir (102).

11. Garniture d'assemblage (1) servant à assembler de manière transversale deux parties de paroi (103, 104) d'une partie de meuble (101) comprenant un dispositif de fixation (2) - en particulier deux dispositifs de fixation - selon l'une quelconque des revendications 1 à 10.

12. Garniture d'assemblage selon la revendication 11, **caractérisée en ce que** la garniture d'assemblage (1) est réalisée d'un seul tenant.

13. Tiroir (102) comprenant au moins une garniture d'assemblage (1) - en particulier deux garnitures d'assemblage - selon la revendication 11 ou 12.

14. Meuble (100) comprenant au moins un tiroir (102) selon la revendication 13.
